Europäisches Patentamt

(19) European Patent Office

Office européen des brevets

(11) **EP 0 833 192 A1**

## (12) EUROPEAN PATENT APPLICATION

(43) Date of publication:
**01.04.1998 Bulletin 1998/14**

(51) Int. Cl.6: **G03B 21/64**, G03B 21/132

(21) Application number: **96202704.1**

(22) Date of filing: **27.09.1996**

(84) Designated Contracting States:
**DE ES FR GB IT SE**

(71) Applicant:
**MINNESOTA MINING AND MANUFACTURING COMPANY
St. Paul, Minnesota 55133-3427 (US)**

(72) Inventor:
**Petersen, Johann,
c/o 3M Lab. (Europe) GmbH
4153 Neuss (DE)**

(74) Representative:
**Isenbruck, Günter, Dr. et al
Patent- und Rechtsanwälte Bardehle-
Pagenberg-Dost-Altenburg-Frohwitter-Geissler
& Partner
Theodor-Heuss-Anlage 12
68165 Mannheim (DE)**

## (54) Transparency holder and method of manufacturing thereof

(57)     The present invention relates to a holder for machine feedable imageable transparencies for overhead projectors as well as a manufacturing method therefor, said holder including a single, substantially rectangular transparent sheet material having two major surfaces, at least one light permeable or light restricting edge portion disposed along at least one of the edges of the transparent sheet material, said transparent sheet material and said at least one light permeable or light restricting edge portion defining a transparent window and said holder comprising means located within said transparent window for self-supportive attachment of a transparency.

Fig. 2

## Description

The present invention relates to a transparency holder for storage and display of large diapositives/transparencies, in particular machine feedable diapositives/transparencies on overhead projectors, as well as a method of manufacture of the transparency holder.

Large diapositives or overhead transparencies are often produced in a rectangular shape e.g. in the European A4 size or in the American letter size. Such transparencies may be produced in attractive, multicoloured designs which take a considerable time to produce and represent products of considerable value both as far as the information content as well as the cost to produce them. Accordingly, it is often required to store the transparencies for some time and even to reuse them. On the other hand, information on a particular transparency can easily become out of date and it is necessary to replace one or more transparencies in a set of transparencies prepared for a particular presentation. Further, it is often useful to be able to write onto a transparent surface which is co-extensive with the transparency during a presentation in order to highlight particular aspects or to make corrections or amendments without making permanent marks on the transparency. The transparency may thus be reused in its original form with another unmarked holder.

In order to meet these requirements various types of transparency holder have been developed. In order to allow for a quick replacement of a transparency as well as to provide a transparent surface on which can be written without permanently marking the transparency, several designs of transparency holder have been produced which include an envelope into which the transparency may be placed, for example WO 94/09406, US-4 402 585, US-5 266 987, US-5 237 355, US-5 371 560, US-4 402 585. The envelope consists of two transparent polymeric films which are joined together by welding, heat sealing or some other means. Attached to at least one side of the longer side of the envelope is a foldable flap which obscures light between the edge of the transparency and the outer edge of the illuminated part of the projector. This improves the appearance and clarity of the transparency when projected. Such foldable flaps have also been provided with a single sheet of imageable material as described in US-5 319 400.

In the designs mentioned above the envelope is provided by two co-extensive transparent films joined at two or more edges. In DE-3435205 a pocket has been proposed which is formed from a second transparent sheet smaller than the first sheet to which it is applied. It is recommended to use a dark or opaque adhesive for connecting the smaller piece of transparent material when forming the pocket.

In DE-3702877 a holder for transparencies is proposed which consists of an opaque frame to which two foldable opaque flaps are attached along the longer edges. Adhesive is provided on the opaque frame for location and securing of a transparency. This adhesive is applied in positions such that the foldable flaps when in their closed position cover and protect the adhesive layer.

EP-0044633 describes an overhead projector transparency mounting frame including adhesive means for the attachment for a transparency. This known overhead transparency mounting frame has a recessed transparency mounting surface marginal to and surrounding the central opening, which surface is coated with an adhesive having a sufficiently low tack to facilitate the removal and replacement of a transparency. The mounted frame in accordance with EP-0044633 does not allow for comments to be written onto a surface visible on the projection screen which do not mark the transparency itself. In DE-3702877 it states, without further explanation, that the mounting frame in accordance with EP-0044633 does not protect a transparency adequately during storage and it takes up too much space.

US-3924879 describes film transparency displays made by imprinting an image on a soft flexible transparent film with a glossy surface. Slides are made by adhering flexible film transparencies to acrylic plates without adhesive. The transparencies are removable - the adhesion relies on the "cling" property of very soft films such as highly plasticised PVC. Such very soft films are not machine feedable as defined in accordance with the present application as they are so soft that they wrap themselves around and cling to the rollers in copying or printing machines. Further, the low temperature stability of PVC films makes them unsuitable for copying or printing machines as the temperatures required to fix the coloured toners used to form the image to the transparency are too high.

Summary of the invention

The present invention relates to a holder for machine feedable imageable transparencies for overhead projectors, said holder including a single, substantially rectangular transparent sheet material having two major surfaces, at least one light permeable or light restricting edge portion disposed along at least one of the edges of the transparent sheet material, said transparent sheet material and said at least one light permeable or light restricting edge portion defining a transparent window and said holder comprising means located within said transparent window for self-supportive attachment of a transparency.

The present invention also includes a system for holding a machine feedable imageable transparency for overhead projectors, comprising:

a holder including a single, substantially rectangular transparent sheet material having two major surfaces, at least one light permeable or light restricting edge portion disposed along at least one of the edges of the transparent sheet material, said transparent sheet material and said at least one light permeable or light restricting edge portion defining a transparent window;

at least one machine feedable imageable transparency; and

means for self-supportive attachment of the transparency, said attachment means being located within said transparent window.

The present inevntion also includes a method of manufacturing a transparency holder from a transparent sheet material, comprising the steps:

a) forming a transparent window from a single, substantially rectangular transparent sheet material and at least one permeable or light restricting edge portion;

b) applying an at least translucent, tacky pressure sensitive adhesive layer on said transparent sheet material within said transparent window.

A transparency is preferably attachd to the holder in accordance with the invention by means of an adhesive layer. The adhesive layer may be translucent, transparent or is preferably optically clear. Further, the adhesive layer may be of a sufficiently low tack that the transparency may be removed without damage thereto. Preferably, the adhesive layer may be a repositionable adhesive layer which allows multiple removals and attachments of transparencies to the transparency holder without transfer of adhesive to the transparency.

The dependent claims define further embodiments of the present invention.

The invention may provide the following advantages:

• the transparency with its holder is thinner by one layer of sheet material compared to conventional designs
• the cost of manufacture may be reduced
• the weight of the holder may be reduced
• the amount of plastic waste generated by disposing of the holder is reduced
• the transparency with its holder may transmit more light than a conventional assembly
• avoidance of a pouch, pocket or envelope on the holder which is substantially the same size as the transparency to be held.

The invention, its embodiments and advantages will be described in the following with reference to the drawings.

Brief description of the drawings

Figure 1 shows a schematic representation of a first embodiment of the present invention.

Figure 2 shows a schematic representation of a second embodiment of the present invention.

Figure 3 shows the embodiment in accordance with Fig. 2. with the flaps in the partly extended position.

Figure 4 shows a cross-section through the embodiment in accordance with Fig. 2.

Figure 5 shows a schematic diagram of a manufacturing process in accordance with the present invention.

Figure 6 shows a further diagrammatic representation of the manufacturing process in accordance with the present invention.

Figure 7 shows a schematic representation of a transparency in accordance with another embodiment of the present invention.

Description of the preferred embodiments

In the following the present invention is described with reference to specific embodiments but the invention is not limited thereto but merely by the claims. The drawings show schematic representations used for non-limiting description of the invention. Certain dimensions of the drawings may be exaggerated for purposes of clarity.

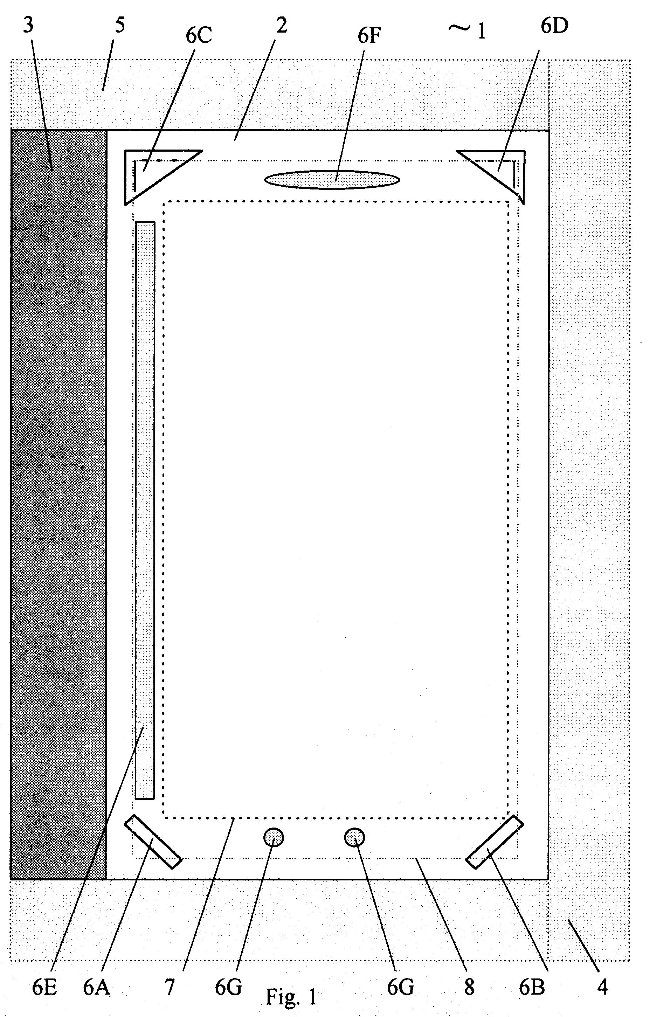

Fig. 1 shows a schematic representation of a first embodiment of the transparency holder in accordance with the present invention. The transparency holder 1 includes a single translucent or transparent sheet material 2 which may be of a rectangular shape, e.g. the European A4 size or the American letter size. The transparent sheet material 2 may be flexible or rigid and may be made from any suitable material such as glass, polymethylmethacrylate, polyester flexible sheeting, polyethylene sheeting or similar. Sheet 2 is prefeerably flexible and light in weight. The transparent sheeting 2 should be sufficiently transparent that it can be used for projection on an overhead projector without reducing light intensity of the projected image to a sufficient extent that the image is not visible to those wishing to view the image on the projection screen. It is preferable if at least one of the surfaces of the transparent sheet 2 is able to receive coloured inks of the kind used in marking pens. Along at least one longitudinal edge of transparent sheet 2 is fixed a light permeable or light restricting edge portion 3 which is attached to, or is integral with transparent sheet 2 so that it extends away from the transparent sheet 2. Optionally, a second edge portion 4 may be provided on the longitudinal edge opposite the longitudinal edge to which flap 4 is attached. Further, additional edge portions 5 may be provided on one or both of the shorter edges of sheet 2.

Edge portion 3 and edge portions 4,5 (if provided) define with transparent sheet 2 a transparent window which in the embodiment shown in Fig. 1 extends from the inner edge of edge portion 3 to the opposite side of the transparent sheet (the inner edge of edge portion 4, if present) and to the shorter edges of sheet 2 (the inner edges of edge portions 5, if present).

Within the transparent window, means 6 for supporting a transparency 8 are provided. The transparencies for use with the present invention should be machine feedable and capable of withstanding the temperatures required to place and fix an image on at least one of their surfaces. In accordance with the present invention, it is only necessary to provide self-supportive attachment of the transparency 8 so that the transparency 8 does not move during display on a projector. The holding means 6 may be any suitable mechanical device for holding a transparency 8 in a self-supportive manner. For example, holding means 6 may be one, two or more slits 6A, 6B in transparent sheet 2. The slits are preferably placed in the corners of the transparent window and may be angled at 30 to 60° to the edges of the sheet 2. The holding means can also be small triangular pockets 6C, 6D, which may be placed in the corners of the transparent window. The triangular pockets 6C, 6D may be transparent, translucent or opaque. The pockets 6C, 6D may consist of small triangular opaque, translucent or transparent portions of polymeric material adhered, welded, e.g. ultra-sonically, or heat welded to sheet 2.

It is preferred if the imaged side of the transparency 8 is attached to the transparent window of sheet 2 by the holding means 6. The holder 1 with attached transparency 8 is then placed on the projector with the non-imaged side of the transparency 8 being adjacent to projecting surface of the projector. This presents the outer surface of sheet 2 towards the speaker so that comments may be written onto this surface without damaging or permanently marking the transparency 8. When the holder is stored, the outer surface of the holder 1 and the non-imaged surface of the transparency 8 face outwards and protect the imaged surface of the transparency 8 which faces inwards.

It is preferred that the attachment means 6 is coplanar with the sheet 2 so that it is only necessary to lay down the transparency 8 onto the surface of the sheet 2 to achieve attachment. Foe example, an adhesive layer 6E, 6F, or 6G may applied to one major surface of sheet material 2 within the transparent window. Adhesive layer 6E, 6F, or 6G may be protected by a separate release foil which is removed prior to attaching the transparency 8 to the transparency holder. The adhesive layer may be a longitudinal strip 6E of adhesive applied close and parallel to the inner edge of edge portion 3. However, the invention is not limited thereto. The adhesive layer may be provided by any suitable area of adhesive, for instance a longitudinal strip of adhesive 6F applied close to and parallel to one of the shorter edges of transparent sheet 2 or one or more areas 6G of adhesive which may be placed anywhere within the transparent window and may have the form of dots, circles, squares or similar. The adhesive layer 6E, 6F, 6G may be opaque, translucent, transparent or coloured. In one embodiment of the present invention it is preferred if the transparency attachment means 6 are applied to peripheral areas of the window of sheet 2 so that a central portion 7 of the transparent window is clear. It is preferred in this embodiment if the combined area of adhesive layers 6 on single sheet 2 is less than 10% of the area of the transparency to be applied, and more preferably less than 5%. It is preferred if a central region 7 of the transparent window is left clear of adhesive, this central area 7 being at least 60%, preferably at least 80% of the area of the transparent window.

It is preferred that the adhesive layer is a pressure sensitive adhesive layer. Useful pressure sensitive adhesives can be any conventional pressure sensitive adhesive that adheres to both sheet 2 and to the transparency 8. Pressure sensitive adhesives are generally described in Satas, Ed., Handbook of Pressure Sensitive Adhesives 2nd Ed. (Von Nostrand Reinhold 1989), the disclosure of which is incorporated by reference. Pressure sensitive adhesives are commercially available from a number of sources. Particularly preferred are acrylate pressure sensitive adhesives commercially utilised by Minnesota Mining and Manufacturing Company of St. Paul, Minnesota and generally described in U.S. Pat. Nos. 5,141,790, 4,605,592, 5,045,386, and 5,229,207.

Non-limiting further examples of pressure sensitive adhesives useful with the present invention include those adhesives described in U.S. Pat. Nos. Re. 24,906 (Ulrich); 2,973,826; Re. 33,353; 3,389,827;4,112,213; 4,310,509; 4,323,557; 4,732,808; 4,917,929; and 5,296,277 (Wilson et al.) and European Publication 0 051 935, the disclosures of which are incorporated by reference herein. A useful adhesive is an acrylate copolymer pressure sensitive adhesive formed from a 90/10 weight percent monomer ratio of 2-methylbutyl acrylate/acrylic acid in a 65/35 heptane/acetone solvent system (39-41% solids) and having an inherent viscosity of about 0.7-0.85 dl/g. Thickness of adhesive can range from about 0.012 mm to about 1 mm with a thickness of about 0.02 to 0.025 mm (0.8 to 1 mil) being preferred.

It is preferred if adhesive layer 6 have a suitable low tack, so that a transparency 8 may be fixed to the transparency holder 1 by means of the adhesive layer 6 and may subsequently be removed therefrom, without damage to the transparency 8. It is particularly preferred if the adhesive layer is a repositionable adhesive layer. It is preferable if the pressure sensitive adhesive fulfils one or more of the following five requirements. These requirements are consistent, and or normally associated with the term "repositionable" as used in the adhesives industry:

1. The adhesive layer must adhere to more strongly to the sheet 2 than to the transparency 8. This may be accomplished by at least four methods:

a) putting a primer on the sheet 2 so that a single layer of adhesive adheres more strongly to sheet 2 than to the transparency 8,

b) using a piece of double-coated tape having differential adhesion with a more aggressive adhesive on the side towards the sheet 2,

c) using a material for sheet 2 which has an inherently greater adhesion to the particular adhesive than a transparency 8 has to the adhesive.

d) reducing the tack on the side of the adhesive layer 6 facing towards the transparency 8. This may be done by reducing the active area of the adhesive, e.g. by printing onto the surface with a printing ink which masks the adhesive property of layer 6. For instance a company logo could be printed onto the surface of the adhesive layer 6.

2. The transparency 8 may be separable from the adhesive layer 6 with a minimum of force. The adhesive may be a low tack adhesive. Only enough adhesion is required to lightly secure the transparency 8.

3. The transparency 8 may be separable from the adhesive layer 6 without transfer of a substantial amount of the adhesive.

4. It is preferable if the transparency 8 is removable from the adhesive layer in accordance with 2 and or/3 above after extended times of contact and under pressures and temperatures normally experienced by a transparency 8 when it is stored in a binder.

In the literature, PSA materials which predictably adhere but are repeatedly peelable from a variety of smooth substrates over a long period of time without damaging the substrate or leaving any adhesive residue or stain on the surface, are usually described as removable. Representative adhesives of this class are described in US Pat Nos. 4,647,505; 3,922,464; 4,599,265; 4,783,354; 4,556,595; 4,735,837 and European Patent Applications 276 557; 443 263; 70 524 as well as DE-36 31 635 and WO 90/0676.

In the present specification, the following definition is used: PSA materials which exhibit an initial value of 90° peel adhesion after 20 minutes dwell time at room temperature on stainless steel of the fresh, i.e. uncontaminated adhesive layer of less than 20 N/1.27 cm which value does not change by more than 50% after 3 days dwell time at room temperature, are termed as removable. Above the limit of 20 N/1.27 cm, removing of the PSA materials from stainless steel is often found to be difficult, and splitting is frequently observed, in particular, for PSA materials exhibiting a low crosslinking density. Such removable PSA materials for use with the present invention can be classified as follows:

| adhesion behaviour | 90° peel adhesion from stainless steel |
|---|---|
| low adhesion | 0-3 N/1.27 cm |
| medium adhesion | 3-8 N/1.27 cm |
| high adhesion | 8-20 N/1.27 cm |

The term removable PSA materials as used in the present specification thus refers to materials which exhibit low or very low values of adhesion (peel adhesion > 0, in particular >0.1 N/1.27 cm and ≤ 3 N/1.27 cm) to medium or high values of adhesion (peel adhesion ≤ 20N/1.27 cm).

5. It is preferable if the adhesive layer 6 is reactivatable or/and are not sensitive to contamination such as dust or natural oils of the kind transferred during handling. The term reactivatable , relates to PSA materials exhibiting after 10 cycles of contamination and reactivation according to methods I or II as described below, values of 90° peel adhesion after 20 minutes dwell time at room temperature on stainless steel of 50% or more with respect to the corresponding values of 90° peel adhesion measured for the fresh, uncontaminated adhesive layer. Preferred are PSA materials exhibiting after 10 cycles of contamination and reactivation a value of 90° degree peel adhesion of 50% or more with respect to the value of 90° peel measured for the fresh, uncontaminated adhesive layer for one of the two methods I and II, and a value of 60% or more for the other of both methods. All values of 90° peel adhesion given in this paragraph refer to a stainless steel surface and were measured after a dwell time of 20 minutes at room temperature.

Even after heavy contamination with dust, dirt or organic compounds etc., the surface of the PSA materials according to the present invention can preferably be cleaned by applying, for example, an aqueous soap solution, lower alcohols like methanol or ethanol or acetone. The PSA layer is then typically rinsed with water and dried. The process of reactivation described is intended to be only illustrative and by no means limiting; the expert can easily give other methods without any inventive activity. It is preferable if the adhesion recovers even after several cycles of contamination and reactivation to a substantive to high or very high percentage with respect to the adhesion of the fresh and uncontaminated PSA layer.

The reactivatability may be determined from a comparison of 90 degree peel adhesion measurements performed for uncontaminated adhesive layer and adhesive layers contaminated in a defined way, respectively.

The adhesive layer to be tested is applied to a layer of siliconized biaxially oriented polyethylene terephthalate (PET) film. This laminate is cut to a width of 1.27 cm. The adhesive is adhered to a smooth stainless steel plate. The layer of PET is removed and a 1.60 cm wide, 140 $\mu$m thick anodised aluminium strip is adhered to the adhesive under a weight of 6.8 kg hard rubber-covered steel roller with 1 pass in each direction. The 90 degree peel adhesion for the uncontaminated sample is measured after 20 minutes dwell time at room temperature by moving the free end of the aluminium strip away from the stainless steel plate at 90 degree and at rate of 305 mm per minute using a tensile tester. The values of the examples are each determined as the average value from two measurements.

In accordance with Method I, $TiO_2$ powder is applied to the surface of the adhesive layer to be tested. The adhesive layer is then treated with 1 g of liquid soap (Kosmetische Waschlotion of Fa. Cleaner Lesko GmbH, Elmshorn) for 15 sec, rinsed with water for 15 sec and dried at 70 °C. The treatment was repeated, and the peel adhesion was measured after 10 contamination and washing cycles, following the procedure outlined above.

In accordance with Method II, the surface of the adhesive layer to be tested is treated with about 200 mg of a cosmetic creme (Stokolan of Fa. Stockhausen), and washed with an aqueous soap solution and rinsed with water as described above. The peel adhesion was measured after 10 contamination and washing cycles, following the procedure outlined above.

It is preferred if adhesive layer 6 is translucent but the invention is not limited thereto. Translucent in terms of the present application means that at least 10% of the incident light may pass through adhesive layer 6. Light transmittance may be expressed as Transmission Optical Density (TOD), which is given by the formula:

$$TOD = \log_{10}\left(\frac{I_i}{I_t}\right),$$

where $I_i$ is the intensity of the incident light on the sample material and $I_t$ is the intensity of the transmitted light passing through the material. TOD may be measured on an optical densitometer such as that supplied by Macbeth, type TD 904. A 10% transmission is a TOD of 1. The sheet 2 and the transparency 8 itself are not perfect optical transmitters. A typical transparency 8 and sheet 2 combination has a TOD of 0.1, i.e. a transmission of 79.4%. The adhesive 6 may reduce this transparency 8 if it is translucent.

Light transmission of continuous coatings of adhesive may be reduced by the presence of air bubbles or voids or fillers. Suitable for the present invention are translucent radiation polymerised acrylic systems described in WO 93/22354 which is incorporated here by reference. These adhesives may be provided in the form of double-sided tapes having one side coated with the translucent adhesive.

Less than optical clarity may be a result of non-continuous adhesive coatings. Such layers may comprise thin coatings of microspheres or hollow microspheres containing adhesives and are translucent due to the discrete particle non-continuous nature of the adhesive layer 6. Thin layers of particulate adhesives may be applied so as to be visible when projected and may be applied in a decorative pattern or in the form of a logo or message.

A suitable adhesive for layer 6 may be pieces for tape of the type Scotch™ 9415, two sided repositionable adhesive tape supplied by Minnesota, Mining and Manufacturing Co., Minnesota, USA.

It is preferred if the adhesive layer 6 on the sheet 2 combined with a non-imaged (clear) transparency 8 has a TOD of less than 0.3 and preferably less than 0.2.

It is preferred if adhesive layer 6 is transparent but the invention is not limited thereto. Transparent in terms of the present application means that the adhesive layer in combination with the transparency 8 transmits over 70% of incident light and 10 point text can be read through it. A transmission of over 70% is a TOD of better than 0.15. An adhesive layer 6 of this type has a TOD of 0.1 or better and should be substantially invisible during viewing of the projected transparency 8 although the perimeter of the adhesive may still be visible.

It is particularly preferred if adhesive layer 6 is optically clear. Optically clear means in accordance with the present application a transmittance of over 90% of incident light (TOD better than 0.05) and preferably a transmittance of better than 95% (TOD of better than 0.02) and a haze of less than 3% and preferably less than 2%. The combination of a non-imaged (clear) transparency 8, sheet 2 and the adhesive layer 6 in accordance with the present invention may have a TOD of less than 0.13, and preferably less than 0.12. In accordance with the present invention the combination of the adhesive layer 6, the sheet 2 and the transparency 8 may have a TOD which is less than the combination of the sheet 2 and the transparency 8 itself. This effect may be caused by wetting of the sheet 2 and transparency 8 surfaces which reduces the number of interfaces and thus may reduce the amount of scattered light.

A particularly preferred adhesive for layer 6 is a removable, repositionable and/or reactivatable, optically clear pressure sensitive adhesive in accordance with co-pending European Patent Application 95104953.5 which is incorporated here by reference. A 100 micron adhesive layer 6 using the adhesive in accordance with European Patent Application 95104953.5 was applied to a standard sheet 2 and a standard non-imaged (clear) transparency 8 applied thereto. The TOD of the sheet and transparency 8 combination was 0.1. The resulting TOD of the adhesive layer 6, the transparency 8 and the sheet 2 was 0.07 indicating that the adhesive layer 6 had improved the optical density of the assembly and therefore the light transmitted through the combination.

Transparent, translucent or optically clear adhesive layers 6 in accordance with the present invention may be coloured with suitable dyes to provide visual accent.

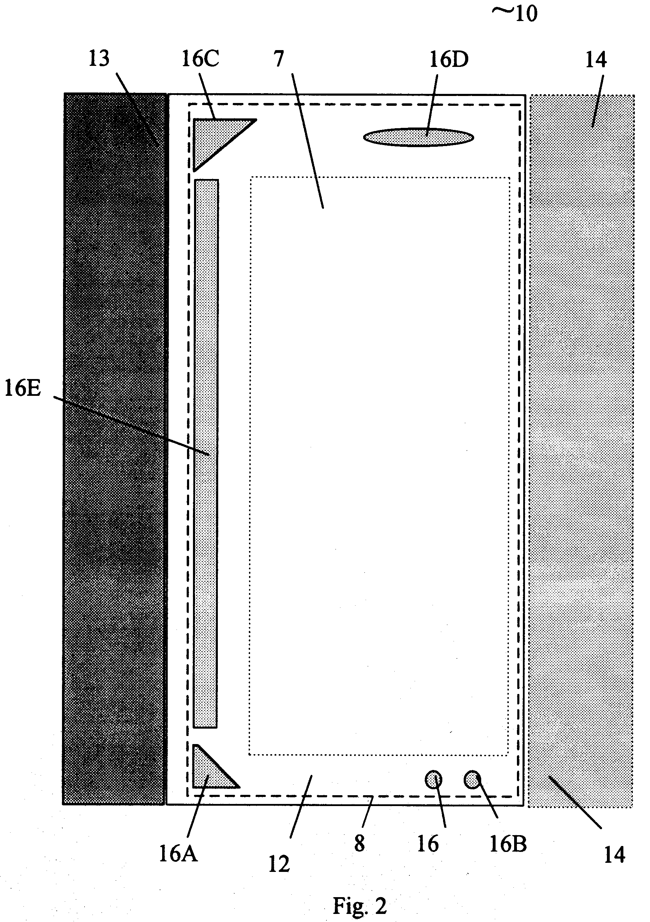

A transparency holder 10 in accordance with a second embodiment of the present invention is shown schematically in Fig. 2. The same materials may be used as described for the first embodiment. Along at least one longitudinal edge of a single transparent sheet 12 is fixed a light permeable or light restricting flap 13 which is hinged to or is integral with transparent sheet 12 so that it may take up an extended position (as shown in Fig. 2) in which flap 13 extends away from the transparent sheet 12, or a folded position in which a flap extends towards the centre of sheet 12 from one of the longitudinal edges. Optionally, a second flap 14 may be provided on the longitudinal edge opposite the longitudinal edge to which flap 13 is attached. Further (not shown) additional flaps may be provided on the two shorter edges of sheet 12.

Flap 13 and flap 14 (if provided) define with transparent sheet 12 a transparent window which in the embodiment shown in Fig. 2 extends from the inner edge of flap 13 to the inner edge of flap 14 and from the shorter edge of sheet 12 to the opposite shorter edge of sheet 12.

On the transparent window of sheet 12 are placed transparency attachment means 16 as described for the first embodiment. Attachment means 16 may be any of the attachment means 6 of the first embodiment. Attachment means 16 may be adhesive layers 16A to E.

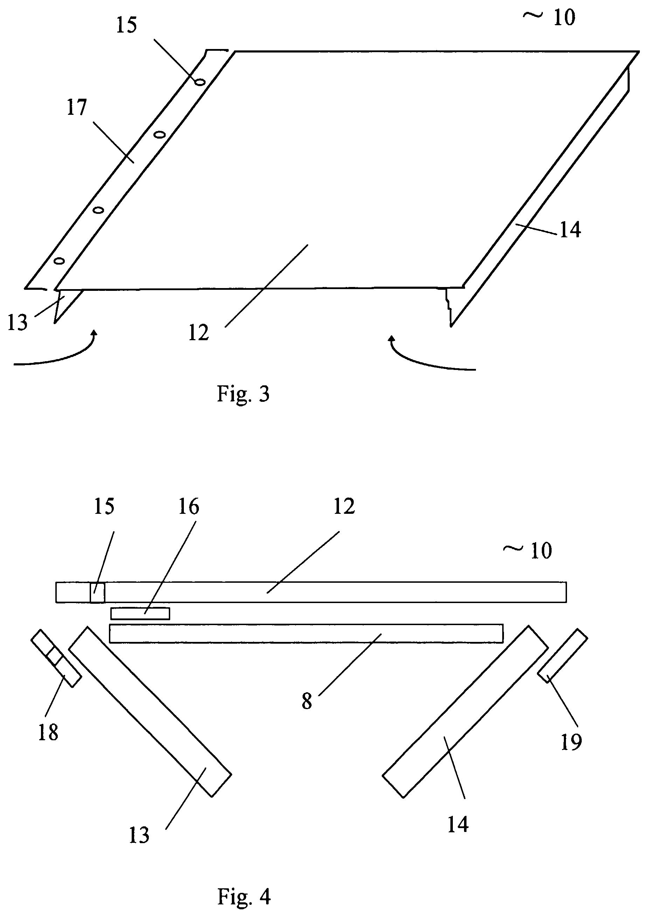

As shown in Fig. 3 the transparency holder 10 in accordance with the second embodiment of the present invention includes a single transparent sheet 12, flaps 13 and optionally 14 as well as an extended portion 17 which may contain securing holes 15 for storage purposes in a binder. Fig. 4 shows a cross-section through a transparency holder 10 in accordance with a second embodiment of the present invention. The transparent sheet 12 is sufficiently wide to include punched holes 15 for securing in a binder. Adhesive layer 16 is applied to a major surface of transparent sheet 12 within the transparent window so that a transparency 8 may be secured thereto. An adhesive layer 16 may be placed in such a way that flap 13 or 14 in its folded position covers adhesive layer 16. Flap 13 is connected to sheet 12 by means of an adhesive strip 18 which may be an adhesive strip in accordance with any of US-5 319 400, US-4 402 585, WO 94/15254, US-A-5 266 987, US-A-5 237 355, US-A-5 371 560, WO 94/09406 or DE-3702877 all of which are incorporated herewith by reference. An additional flap 14 may be provided and may be connected by a further adhesive strip 19 to transparent sheet 12. In a storage position flaps 13 and 14 are folded towards the centre of sheet 12. When no transparency 8 is included within the holder, flap 13 seats onto adhesive layer 16 and protects this layer. Flap 13 may be treated with a release agent such as a silicone release agent described in the book by Satas mentioned above so that flap 3 does not adhere permanently to adhesive layer 16 by "blocking". Blocking is a known phenomenon with weakly adhering and repositionable adhesive layers such that when these are placed under pressure for long periods, the removable property of the adhesive may be lost.

In order to attach a transparency 8 to the transparency holder 10, flaps 13 and 14 are unfolded and transparency 8 is secured to the transparent window in single transparent sheet 12 by attaching transparency 10 to adhesive layer 16. To store the transparency 8 flaps 13 and 14 are folded back towards the centre of transparent sheet 12 and the complete assembly may now be located in a binder by means of holes 15 in portion 17 of transparent sheet 12. If necessary, the extended portion 17 of transparent sheet 12 may be reinforced by a further adhesive strip which may also include the adhesive strip 18 for attaching flap 13 to sheet 12.

In accordance with the previous embodiments of the present invention relatively small areas of transparency attachment means 6, 16 such as adhesive layers, are provided on the transparent window of a sheet 2, 12. The transparency attachment means 6, 16 are preferably applied to peripheral areas of the window of sheet 2,12 so that a central portion 7 of the transparent window is clear. It is preferred if the combined area of adhesive layers 6,16 on single sheet 2,12 is less than 10% of the area of a transparency to be applied which is usually substantially the same size as the transparent window, and more preferably less than 5%. It is preferred if a central region 7 of the transparent window is left clear of adhesive, this central area 7 being at least 60%, preferably at least 80% of the area of the transparent window.

The present invention is not however limited to small areas of adhesive. The complete transparent window or the central portion 7 of holder 1, 10 may be coated with a layer of respositionable adhesive in accordance with European Patent Application 95104953.5. The transparency 8 may then be applied to the window with the imaged side thereof applied towards the adhesive so that at least the central portion 7 has improved optical transmission as mentioned above. The adhesive strength of the adhesive layer may be adjusted so that it does not damage the imaged surface of transparency 8. The improved light transmission may be used to provide particularly projected transparencies with improved clarity. To protect the large area of adhesive, flaps 3,4; 13,14 may be made lareger so that they overlap in the middle thus protecting the whole of the adhesive area until the holder 1, 10 is required for use.

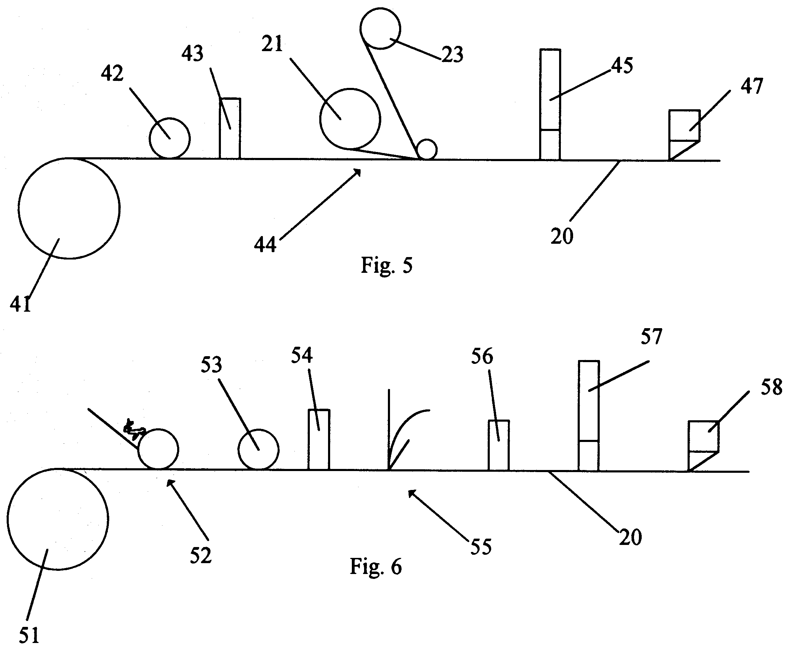

Fig. 5 shows a schematic representation of a manufacturing method for a transparency holder 10 which will be described with reference to the second embodiment of the present invention. A suitable single, clear or transparent film 20 is provided on a roll 41. The film 20 is drawn from roll 41 and is rotary screen printed with adhesive spots 16 within the transparent window at position 42. The adhesive may be any of those mentioned above including hot melt, high solid adhesive or UV curing adhesive. At position 43 the adhesive is dried or cured by means of infrared or ultra violet light. At position 44 suitable film material 21 for producing the flaps 13, 14 of the transparency holder 10 in accordance with the present invention are applied to the transparent sheet 20 by means of adhesive tapes 23. Adhesive tape 23 may be sufficiently wide so that on the one longitudinal edge of transparent sheet 2 an extended reinforced section 17 is formed into which holes 15 may be punched for location in a binder. These holes 15 may be punched at position 45. At position 47 the transparent sheet 12 with flaps 13 and 14 and adhesive layers 16, is cut to length. The order of applying the flaps 13 or 14 (step 44) and the adhesive 16 (step 42) may be reversed so that the flaps 13, 14 are applied first.

Fig. 6 shows an alternative manufacturing process for a transparency holder 10 in accordance with the present invention. Clear or transparent sheet material 20 is provided on a roll 51 and drawn therefrom to a printing station 52 in which at least one edge portion of the transparent sheet 20 is coated with any suitable pigment, such as a white pigment in order to produce flap 13 and optionally flap 14. Flaps 13 and 14 then define with transparent sheet 20 a transparent window for the transparency holder 10. At position 53 the adhesive layer 6 is rotary screen-printed onto sheet 20 within the transparent window at any suitable position or positions. The adhesive is dried or cured at position 54 with ultraviolet or infrared light or similar. At position 55 the outer longitudinal edges of transparent sheet 20 which have been printed at station 52 are folded in order to produce flap 13 and 14. Flaps 13 and 14 may optionally be folded over completely and partially heat-sealed or high frequency welded together at position 56 in order to produce an extended reinforced tab position 17 which may then be punched with suitable securing holes 15 at position 57. At position 58 the transparency holder 10 is cut to length.

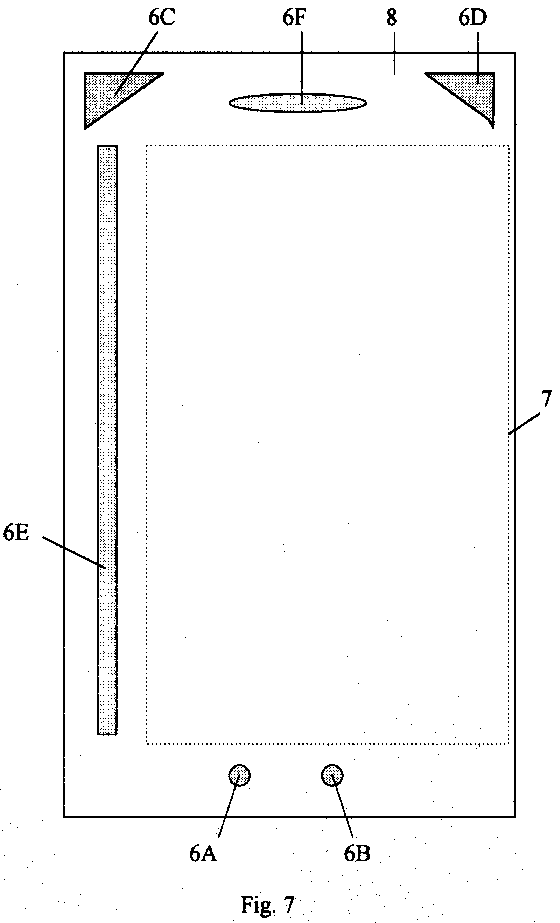

In accordance with a further embodiment of the invention, the transparency attachment means 6 or 16 of any of the previous embodiments may be included on the transparency 8 and not on the holder 1, 10. For example, as shown schematically in Fig. 7, at least one of the adhesive areas 6A to 6F may be located on the transparency 8 towards the periphery of the transparency 8 so that a clear window 7 is left towards the centre thereof. The adhesive areas may be any of the adhesives described for the previous embodiments. The adhesives may be covered by a removable release liner (not shown) which allows use of the transparency in a copying machine for imaging without the transparency 8 adhering to the rollers inside the machine. Before use with a transparency holder, the release liners are removed and the transparency 8 attached to the central transparent sheet 2 of a transparency holder. This embodiment may have the disadvantage that any indicia printed onto the release liner is lost after attachment of the transparency 8 to the holder.

The transparency holder for use with the transparency 8 shown in Fig. 7 may be generally as described for Fig. 1 without the adhesive attachment means. The transparency holder may include a translucent or transparent sheet material 2 which may be of a rectangular shape, e.g. the European A4 size or the American letter size. The transparent sheet material 2 may be flexible or rigid and may be made from any suitable material such as glass, polymethylmethacrylate, polyester flexible sheeting, polyethylene sheeting or similar. The transparent sheeting 2 should be sufficiently transparent that it can be used for projection on an overhead projector without reducing light intensity of the projected image to a sufficient extent that the image is not visible to those wishing to view the projection screen. It is preferable if at least one of the surfaces of the transparent sheet 2 is able to receive coloured inks of the kind used for marking pens. Along at least one longitudinal edge of transparent sheet 2 is fixed a light permeable or light restricting edge portion 3 which is attached to, or is integral with transparent sheet 2 so that it extends away from the transparent sheet 2. Optionally, a second edge portion 4 may be provided on the longitudinal edge opposite the longitudinal edge to which flap 4 is attached. Further, additional edge portions 5 may be provided on one or both of the shorter edges of sheet 2.

Edge portion 3 and edge portions 4,5 (if provided) define with transparent sheet 2 a transparent window which as shown in Fig. 1 extends from the inner edge of edge portion 3 to the opposite side of the transparent sheet (the inner edge of edge portion 4, if present) and to the shorter edges of sheet 2 (the inner edges of edge portions 5, if present).

In accordance with all the embodiments of the present invention the attachment means 6,16 of the transparency 8 does not include a pouch, envelope or pocket which is substantially the same size as the transparency 8 to be held.

**Claims**

1. A holder for machine feedable imageable transparencies for overhead projectors, said holder including a single, substantially rectangular transparent sheet material having two major surfaces, at least one light permeable or light restricting edge portion disposed along at least one of the edges of the transparent sheet material, said transparent sheet material and said at least one light permeable or light restricting edge portion defining a transparent window and said holder comprising means located within said transparent window for self-supportive attachment of a transparency.

2. A system for holding a machine feedable imageable transparency for overhead projectors, comprising:

a holder including a single, substantially rectangular transparent sheet material having two major surfaces, at least one light permeable or light restricting edge portion disposed along at least one of the edges of the transparent sheet material, said transparent sheet material and said at least one light permeable or light restricting edge portion defining a transparent window;
at least one machine feedable imageable transparency; and
means for self-supportive attachment of the transparency, said attachment means being located within said transparent window.

3. Holder according to claim 1 or a system in accordance with claim 2, wherein said attachment means cover an area of less than 10% of the transparency to be applied to the holder.

4. Holder according to claim 1 or 3, or a system in accordance with claim 2 or 3, wherein said attachment means are placed at a peripheral portion of said transparent window so that at least 60%, and preferably at least 80% of the area of said window is free of said attachment means.

5. Holder according to any of the claims 1, 3 and 4, or a system according to any of the claims 2 to 4 wherein said attachment means comprise at least an area of an at least translucent, tacky, pressure sensitive adhesive layer on said transparent sheet material within said transparent window.

6. Holder or system according to claim 5, wherein said pressure sensitive adhesive layer is transparent.

7. Holder or system according to claims 5 or 6, wherein said pressure sensitive adhesive layer is optically clear.

8. Holder or system according to any of claims 5 to 7, wherein said pressure sensitive adhesive layer adheres more strongly to said transparent sheet material than to the transparency.

9. Holder or system according to any of claims 5 to 8, wherein said pressure sensitive adhesive layer is a low tack adhesive layer.

10. Holder or system according to any of claims 5 to 9 wherein said pressure sensitive adhesive layer is a repositionable adhesive layer.

11. Holder according to any of claims 1, and 3 to 10, or a system according to any of claims, 2 to 10 wherein said edge portion includes at least one light permeable or light restricting flap disposed along at least one of the longitudinally extending edges of the transparent sheet material, said flap having a folded and an unfolded position, whereby in one of these positions the flap extends away from the substantially rectangular transparent sheet material and in the other position the flap extends into said transparent window.

12. Method of manufacturing a transparency holder from a transparent sheet material, comprising the steps:

a) forming a transparent window from a single, substantially rectangular transparent sheet material and at least one permeable or light restricting edge portion;
b) applying an at least translucent, tacky, pressure sensitive adhesive layer on said transparent sheet material within said transparent window.

13. Method according to claim 12 wherein said adhesive layer is transparent.

14. Method according to claim 12 wherein said adhesive layer is optically clear.

15. Method according to any of claims 12 to 114 wherein said adhesive layer is a low tack adhesive layer.

16. Method according to any of claims 12 to 15 wherein said adhesive layer is a repositionable adhesive layer.

Fig. 1

~10

13    16C    7         16D         14

16E

16A    12    8    16    16B    14

Fig. 2

Fig. 3

Fig. 4

Fig. 5

Fig. 6

Fig. 7

European Patent
Office

**EUROPEAN SEARCH REPORT**

Application Number

EP 96 20 2704

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | WO 94 09406 A (PLASTUS KREATIV AB ;BENGTSSON RAYMOND (SE)) 28 April 1994 * the whole document * | 1,2,11, 12 | G03B21/64 G03B21/132 |
| A,D | EP 0 044 633 A (MINNESOTA MINING & MFG) 27 January 1982 * the whole document * | 1-16 | |
| A | EP 0 732 223 A (MINNESOTA MINING & MFG) 18 September 1996 * the whole document * | 1,2,11, 12 | |
| A | WO 95 30175 A (WILSON JAMES S ;CHARLES MARCEL ZENO L (US)) 9 November 1995 * page 14, line 34 - page 16, line 16; claims 22-27; figures 1-3,12A,B * | 1,2,11, 12 | |
| | | | TECHNICAL FIELDS SEARCHED (Int.Cl.6) G03B B42F |

The present search report has been drawn up for all claims

| Place of search | Date of completion of the search | Examiner |
|---|---|---|
| BERLIN | 3 March 1997 | Manntz, W |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)